# EUROPEAN PATENT APPLICATION

(11) **EP 2 746 935 A1**
(43) Date of publication of application: **25.06.2014**
(21) Application number: 13196898.4
(22) Date of filing: 12.12.2013
(51) Int. Cl.: G06F 9/44

(54) **User interface with splash screen**

(30) Priority: 20.12.2012 EP 12198478
(71) Applicant: Océ-Technologies B.V., 5914 CA Venlo (NL)
(72) Inventor: Dominicus, Marco, 5931 TG Tegelen (NL)
(74) Representative: van de Sande, Jacobus

(57) **Abstract**

A user interface (12) for a host data processing system (10), comprising a display screen (16) and a display controller (18) adapted to receive image data from the host processing system (10) and to display them on the screen (16), the display controller (18) having access to a non-volatile screen memory (22) storing data for generating a splash screen (20) at least during a start-up of the host processing system (10) when image data from the host processing system are not yet available, wherein the display controller (18) is adapted to update the screen memory (22) in response to commands received from the host processing system (10), and to display an updated splash screen (20) upon the next start-up.

## Description

### BACKGROUND OF THE INVENTION

### 1. Field of the Invention

The invention relates to a user interface for a host data processing system, comprising a display screen and a display controller adapted to receive image data from the host processing system and to display them on the screen, the display controller having access to a non-volatile screen memory storing data for generating a splash screen at least during a start-up of the host processing system when image data from the host processing system are not yet available.

### 2. Related Art

The host data processing system may be a personal computer or workstation or an electronic controller for a machine such as a printer, a copier or the like. The term "host" is used only for distinguishing this processing system from the display controller which can also be considered as a specific kind of data processing system. For brevity, the host data processing system will be termed "host" hereinafter.

When the host is powered-on, it will take a certain time until the operating software has been loaded from a disk or another permanent memory, and as long as this so-called boot process is not yet completed, the host is not capable of outputting image data for control-ling the display screen. It is common practice that a so-called splash-screen is displayed during this boot phase or other phases in which data from the host are not available. For example, the splash screen may contain the logo or brand of the company that has provided the computer or machine or the related software. Although the splash screen may contain animated elements, it is static in the sense that the contents of the splash screen are not controlled by the host and do not depend upon the status of the host.

US 6,173,445 B1 describes a dynamic splash screen which receives and displays data that are provided by a second computer, e. g. via the Internet, during start-up of a first computer.

### SUMMARY OF THE INVENTION

It is an object of the invention to provide a user interface in which the splash screen in capable of presenting additional information to the user.

According to the invention, the display controller is adapted to update the screen memory in response to commands received from the host processing system and to display an up-dated splash screen upon the next start-up. Thus, the updated splash screen that is shown upon the next start-up of the host is capable of providing information that has been received from the host during the last update that has occurred at an earlier time when the host was running. In this way the splash screen is dynamic and capable of informing the user of a status change that may have occurred in an earlier session.

More specific optional features of the invention are indicated in the dependent claims.

For example, when the software for the host has been upgraded during the last session, the splash screen may advise the user of the upgrade.

Moreover, when changes of the software or the status of the host have resulted in a change in the time duration that is needed for booting, this time duration may be communicated to the user on the splash screen, e. g. in the form of a progress bar.

As another example, when the user interface is provided for computers running with different software, e. g. operating systems from different software firms, the logo of the soft-ware firm may be incorporated into the splash screen in the first update that is made while the computer is running with the pertinent software. The same applies to brands of manufacturers of machines when the user interface is used for the related machine controllers.

The update may be made at any time during the host session. It is preferable however when the update is made at the end of the session, e. g. in a shut-down procedure, so that the updated splash screen will show the most recent status of the host.

The splash screen may be displayed not only during the start-up phase but also in other phases in which the host is occupied with other tasks than controlling the image on the display screen, for example, in phases in which new software or software upgrades are loaded and installed, in phases where the host enters into a sleep mode or recovers there-from, and also when a shut-down command has been entered and the host is in a shut-down mode.

In a particularly preferred embodiment, at least part of the screen memory is configured as a random access memory (RAM) the contents of which can readily be changed in response to commands and data from the host. Then, for example, the contents of the RAM may be changed in accordance with the current status of the host, so that the splash screen may contain varying text messages that indicate the current status of the host. Thus, while the first splash screen that is displayed during start-up may, for example, include the status message "starting-up", messages like "entering into sleep mode" or "recovering from sleep mode" may be displayed at the beginning and the end, respectively, of a sleep mode phase, and a message "shutting-down" may be displayed when the host is turned off. All these splash screens may also include a respective progress bar indicating the expected time for which the current status condition will last.

Similarly, when the host is busy with loading and installing new software, the information on the time needed therefor is available in the host and may be transmitted to the display controller for updating the RAM screen memory, so that the corresponding splash screen may indicate the activity that the host is performing and also the expected time until an application program will available again.

### BRIEF DESCRIPTION OF THE DRAWINGS

Embodiment examples of the invention will now be explained in greater detail in conjunction with the drawings, wherein:
Fig. 1 is a block diagram of a data processing system and a user interface according to the invention;
Fig. 2 is a flow diagram of a computer session, illustrating a simple embodiment of the invention; and
Fig. 3 is a flow diagram illustrating a more elaborated embodiment of the invention.

### DETAILED DESCRIPTION

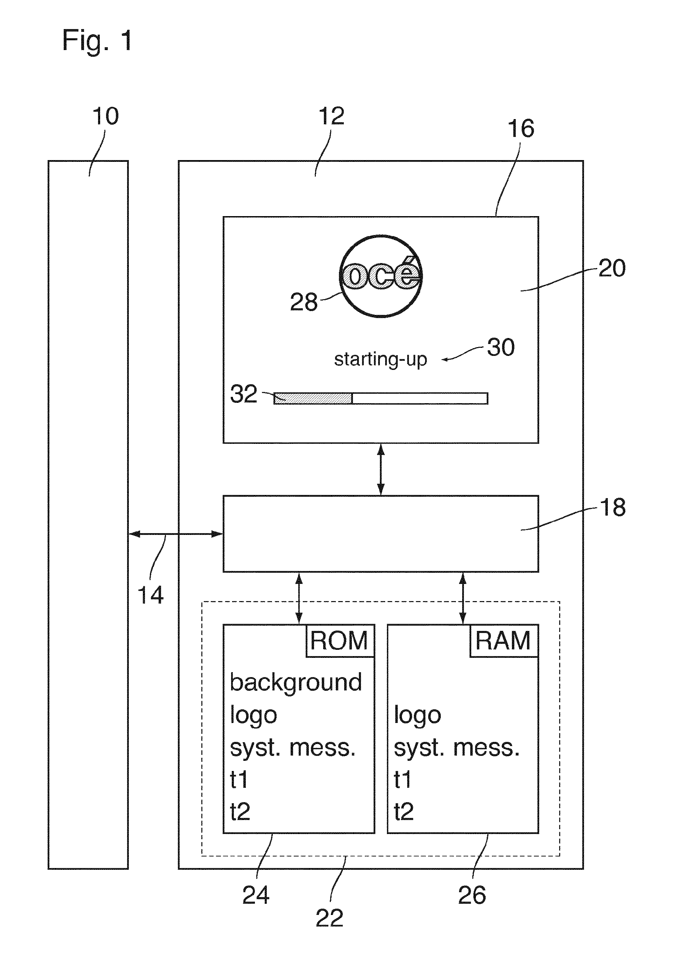

As is shown in Fig. 1, a host data processing system 10, e. g. a multi-purpose computer or a controller of a printer or the like, is connected to a user interface 12 by any suitable communication link 14, e. g. a video cable, an USB link or the like.

The user interface 12 comprises a display screen 16 and a display controller 18. During normal operation of the host 10, the display controller 18 will receive image data (video data) via the link 14 and will control the screen 16 so as to display an image that corresponds to the video data. However, in the situation shown in Fig. 1, the screen 16 displays a splash screen 20 that is not controlled by the video data from the host 10 but is generated by the display controller 18 on the basis of data that are read from a local screen memory 22.

In the example shown, the screen memory 22 is composed of a non-volatile flash memory (ROM) 24 and a volatile random access memory (RAM) 26. The memories 24, 26 may be integrated with the display controller 18. Optionally, one of these memories, e. g. the RAM 26, may also be provided on a separate board.

The flash memory 24 permanently stores the data that are needed for generating the first splash screen 20 that will be shown upon start-up of the host 10. In the example shown, these data comprise a background colour, a logo 28 (company brand), a system message ("starting-up" in this example) and two time values t1 and t2.

The time t1 is the expected time that will be needed for the boot procedure in the host 10. On the basis of this time t1, the display controller 18 generates a progress bar 32 that will be gradually filled with a constant speed that is selected such that the time for completely filling the progress bar corresponds to the time t1 and hence reflects, at least approximately, the progress of the boot procedure, even though the display controller 18 cannot actually monitor the progress of the booting operation.

When the booting operation has been completed successfully, the host 10 should send a signal via the link 14, indicating that the host is now operative and ready to take over the control of the screen 16. The time t2 is a so-called extended time in which the display controller 18 waits for this message from the host 10. If the message should not be received within the time specified by t2, an error message will be shown. Of course, the text of this error message can also be stored in the flash memory 24.

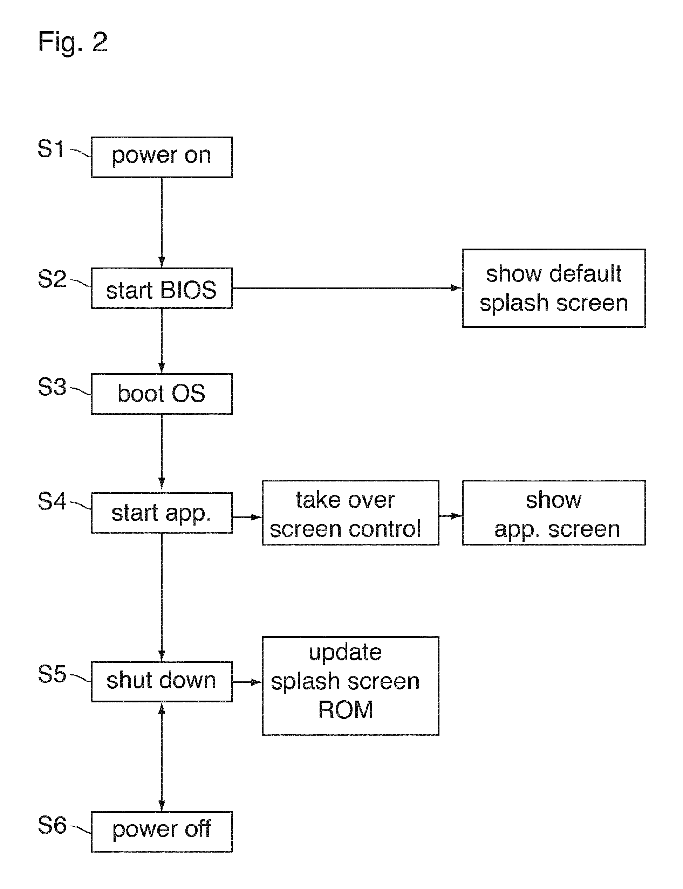

An example of a simple session with the host data processing system 10 will now be explained by reference to Fig. 2.

In step S1, the power supply for the host 10 and the user interface 12 is switched on, whereupon the BIOS will start in the host 10 in step S2. Simultaneously, the display controller 18 causes the display screen 16 to show the splash screen 20. It shall be assumed here that the flow diagram in Fig. 2 represents the very first session after the host 10 and the user interface 12 have been delivered from the factory. In this case, the splash screen is a default splash screen in which the entries for the logo and the time t1 and t2 are set to default values. The default value for the logo may be "empty" which means that no logo is shown at all.

Then, in step S3, the operating system for the host 10 is booting. Meanwhile, the progress bar 32 in the splash screen 20 is filled with a speed specified by the time value t1.

In step S4, the booting operation is completed so that the host (the operating system thereof) may take over and may send a video signal via the link 14 to the display controller 18 which will cause the screen 16 to switch from the splash screen to a screen that is determined by the video signal. When the host has loaded and started at least one application program, the image of the screen 16 will be determined by this application.

When the application program has been running for a certain time, typically with some interaction between the application and the user, the user may enter a command for terminating the session, whereupon the host 10 is shut-down in step S5. This triggers a specific shut-down procedure in which all applications are closed properly and data that will still be needed are saved in a permanent memory, before the power is finally switched off in step S6.

However, according to the invention, one of the steps performed in the shut-down procedure in step S5 is an update of the splash screen 24. During this update, data defining the logo 28, e. g. the logo of the company that has provided the software that has just been running on the host, are loaded into the flash memory 24 and permanently stored therein. Similarly, depending on the data volume to be loaded in the boot procedure, the time values t1 and t2 may be updated as well, thus, next time when the host 10 is started-up, the splash screen 20 will show the company logo 28, and the progress bar 32 will indicate the actual progress of the boot procedure more realistically.

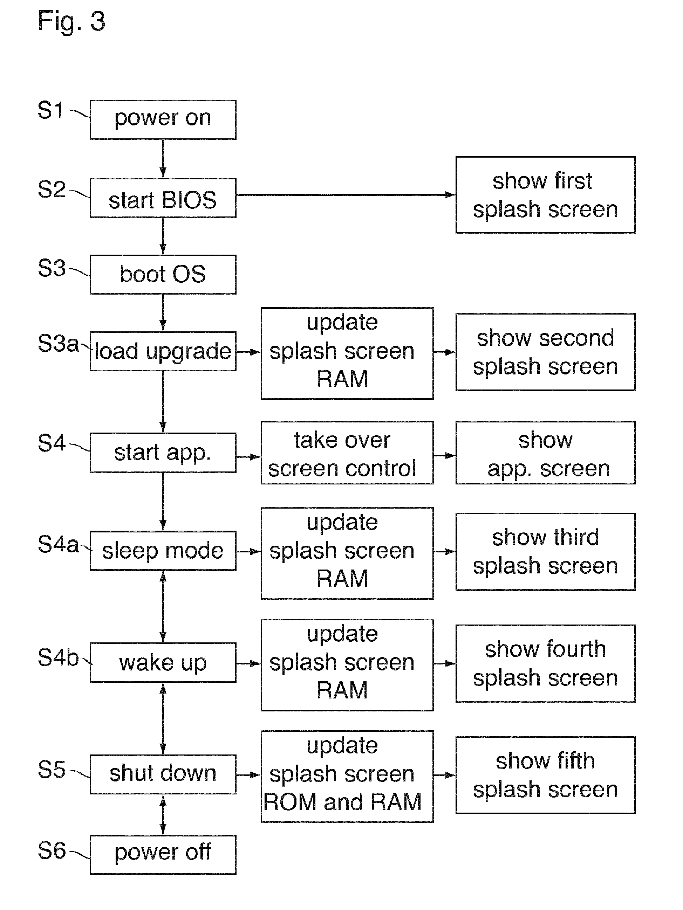

The purpose of the volatile splash screen RAM 26 will now be explained in conjunction with Fig. 3 which illustrates another example of a host session.

The steps S1 - S3 are the same as in Fig. 2. Then however, a software upgrade is loaded in a step S3a. The command for loading an upgrade may be entered manually by the user or by service personnel. In a preferred embodiment, however, the operating system of the host 10 connects to a network (Internet) to search whether new software upgrades are available, and if this is the case, one or more upgrades are loaded and installed automatically. In this case, the operating system (or a specific software updater contained therein) determines the number of upgrades to be made as well as the expected time needed for loading and installing them. Then, the display controller 18 is instructed to update the system message and the time values t1 and t2 in the RAM 26. For example, the system message may read "loading upgrade 1 of 3", when the number of upgrades is 3. The time t1 may reflect the total time for all three upgrades. As an alternative, when more than one item of software is loaded, a separate update will be made for each item, and the system message may identify the software item be loaded, and time t1 may indicate the time for loading and installing this specific item. The splash screen 20 will change accordingly into a "second" splash screen.

When the new software has been installed, the application software will start in step S4 as usual, and the application software will take control over the display screen 16. Further, in this example, when the host 10 has been idle for a certain time, it enters into a sleep mode in a step S4a. Similar to a complete shut-down, the transition into the sleep mode also requires certain procedure which take a certain time. Accordingly, the RAM 26 is updated by a corresponding system message ("going to sleep mode"), and the time values t1 and t2 are updated so that the progress bar 32 will reflect the progress of the transition into the sleep mode in a "third" splash screen.

In step S4b, the sleep mode is terminated by a corresponding wake-up command entered by the user, and the recovery from the sleep mode will be indicated by a corresponding system message, and the time needed will be indicated by new time values t1 and t2 in an update of the RAM 26 for a "fourth" splash screen.

In step S5, the host 10 is finally shut-down. Since the time needed for the shut-down procedure may depend upon the current status of the host, it may be useful to indicate the time needed for the shut-down in another update of the RAM 26 for a "fifth" splash screen. This update will also produce a new system message, e. g. "shutting down".

Since RAM 26 is a volatile memory, the information that has been stored in the last update will be lost when the power is turned off in step S6. However, as in the example shown in Fig. 2, the step S5 also includes an update of the flash memory (ROM) 24, with the result that an updated "first" splash screen will be shown when the host is powered-on next time.

## Claims

1. A user interface (12) for a host data processing system (10), comprising a display screen (16) and a display controller (18) adapted to receive image data from the host processing system (10) and to display them on the screen (16), the display controller (18) having access to a non-volatile screen memory (22) storing data for generating a splash screen (20) at least during a start-up of the host processing system (10) when image data from the host processing system are not yet available, **characterized in that** the display controller (18) is adapted to update the screen memory (22) in response to commands received from the host processing system (10), and to display an updated splash screen (20) upon the next start-up.

2. The user interface according to claim 1, wherein the screen memory (22) comprises a flash memory (24).

3. The user interface according to claim 2, wherein the flash memory (24) is updated in a shut-down procedure of the host processing system (10).

4. The user interface according to any of the preceding claims, wherein the screen memory (22) includes memory space for a logo (28), said memory space being capable of being updated.

5. The user interface according to any of the preceding claims, wherein the screen memory (22) includes memory space for a text message (30), said memory space being capable of being updated.

6. The user interface according to any of the preceding claims, wherein the screen memory (22) includes memory space, capable of being updated, for at least one time value (t1), and the display controller (18) is configured to create and display a progress bar (32) on the basis of this time value (t1).

7. The user interface according to claim 6, wherein the screen memory (22) includes memory space for storing and updating another time value (t2) specifying a time window within which a response from the host processing system (10) is expected.

8. The user interface according to any of the preceding claims, wherein the screen memory (22) comprises a volatile memory (26), and the display controller (18) is configured to update this volatile memory (26) in response to commands received from the host processing system (10) so as to change the splash screen while the host processing system (10) is running.

9. The user interface according to any of the preceding claims, wherein the display controller (18) is configured to update the screen memory (22), preferably the volatile memory (26), and to show an updated splash screen (20) when at least one of the following conditions is fulfilled:
- new software is being loaded;
- the host processing system (10) enters into a sleep mode;
- the host processing system (10) recovers from a sleep mode; and
- the host processing system (10) is being shut-down.
